Europäisches Patentamt

European Patent Office

Office européen des brevets

(19)

(11) Numéro de publication : **0 520 892 A1**

## (12) DEMANDE DE BREVET EUROPEEN

(21) Numéro de dépôt : **92401792.4**

(22) Date de dépôt : **25.06.92**

(51) Int. Cl.5 : **A01G 31/00**

(30) Priorité : **27.06.91 FR 9107931**

(43) Date de publication de la demande :
**30.12.92 Bulletin 92/53**

(84) Etats contractants désignés :
**BE CH DE DK ES FR GB IT LI LU NL PT SE**

(71) Demandeur : **ISOVER SAINT-GOBAIN**
**18, avenue d'Alsace**
**F-92400 Courbevoie (FR)**

(72) Inventeur : **De Graaf, Martien**
**Ijweg 697**
**NL-Vijfhuizen (NL)**

(74) Mandataire : **Debay, Yves**
**Cabinet Yves Debay, 122 Elysee 2**
**F-78170 La Celle Saint Cloud (FR)**

(54) **Voile en fibres hydrophiles et utilisation du voile dans un substrat de culture hors-sol.**

(57) L'invention est relative à un voile en fibres hydrophiles et l'utilisation du voile dans un substrat de culture hors-sol.

Le substrat selon l'invention comprend un voile de fibres hydrophiles faisant obstacle au passage des racines d'une zone de substrat dont les caractéristiques hydriques et d'air sont favorables au développement des racines vers une zone qui leur est défavorable. Le voile de fibres hydrophiles couvre au moins les surfaces de contact entre les deux zones, et son maillage comporte des ouvertures d'un diamètre inférieur à 250 microns. Le voile peut être constitué de fibres de verre et sa masse surfacique peut être comprise entre 50 et 300 g/m$^2$.

FIG. 3

EP 0 520 892 A1

L'invention est relative à un voile en fibres hydrophiles et l'utilisation du voile dans un substrat de culture hors-sol.

L'utilisation de feutres minéraux pour la culture hors-sol a fait l'objet de nombreuses publications. A l'origine, la principale qualité recherchée était la capacité à retenir un maximum de solution nutritive pour les plantes. Des études ultérieures ont fait apparaître que l'obtention des meilleures conditions pour la culture conduisait à des caractéristiques supplémentaires. Parmi ces caractéristiques, il est apparu que si la quantité de solution stockable dans le matériau de culture était un facteur important pour assurer une alimentation constante des plantes en eau et éléments nutritifs, un autre facteur de première importance était la capacité du substrat à fournir de l'air aux racines des plantes cultivées.

Pour cela, le matériau constituant le substrat de culture doit permettre d'établir un équilibre optimal air/eau pour la culture, l'optimum étant variable suivant les plantes considérées.

Diverses solutions ont été envisagées pour satisfaire cette exigence de l'équilibre air/eau. Parmi ces solutions, il a été proposé précédemment de modifier la structure du feutre, en particulier pour contrecarrer la tendance naturelle de l'accumulation de la solution à la base de produit tandis que les parties supérieures se vident de solution. Cette tendance est d'autant plus sensible que le produit offre une épaisseur plus importante.

Une des solutions envisagées précédemment par la demanderesse dans la demande de brevet français N° 2 621 218, consistait à moduler les caractéristiques des fibres constituant le substrat en fonction du niveau où elles se situent dans l'épaisseur dudit substrat. En substance, il convenait de faire en sorte d'accroître l'aptitude de la partie supérieure du feutre à retenir la solution par rapport à la partie inférieure. Cette modulation peut être obtenue, par exemple, en disposant un réseau de fibres plus fines dans la partie supérieure du feutre. A masse volumique égale, on avait en effet constaté une meilleure aptitude à retenir les solutions pour les produits offrant la plus grande surface spécifique.

Simultanément, il a été également proposé de contrôler l'équilibre air/eau dans les substrats de culture hors-sol en modifiant la structure capillaire des feutres dans leur épaisseur. Dans ce sens, toutes choses, et en particulier la finesse des fibres, étant égales par ailleurs, une masse volumique plus élevée conduit à un réseau plus dense et à une meilleure rétention de solution.

Toutes ces conditions permettent, à des degrés divers, une meilleure répartition de la solution et un meilleur équilibre air/eau. Les inventeurs ont cependant constaté qu'il était difficile de prévenir par ces moyens la constitution d'une accumulation de solution au contact de la face inférieure du substrat. Tant que la solution imbibe le substrat à l'interface avec le sol ou le support sur lequel repose le substrat pendant la culture, un film liquide a tendance à se maintenir de façon permanente.

La présence d'une zone pratiquement saturée en eau à la base du substrat s'est avérée néfaste à la croissance des plantes, quel que soit le stade de la culture considéré. Dans tous les cas, on constate que la présence d'une zone saturée d'eau conduit à un développement de racines dans cette zone ou à son contact immédiat, au détriment d'une "colonisation" plus complète du volume offert par le substrat. Ceci a au moins deux conséquences. En premier, les racines ne croissent pas sur l'ensemble du volume du substrat et même si elles sont très abondantes dans la zone saturée, globalement le système racinaire ne connait pas le développement le meilleur et le plus important. En second lieu, les racines qui se développent dans les zones saturées sont très pauvres en ramifications les plus fines. Il s'agit de ce que l'on désigne sous le nom de "racines d'eau". Ces racines se trouvent dans un milieu pauvre en oxygène dissous nécessaire à la croissance de la plante.

Un premier but de l'invention est de proposer un produit qui permette de palier les inconvénients ci-dessus.

Ce premier but est atteint par le fait que le produit est un voile en fibres hydrophiles s'opposant au passage des racines et dont le maillage comporte des ouvertures d'un diamètre inférieur à 250 microns.

Selon une autre particularité, le voile est constitué de fibres de verre.

Selon une autre particularité, la masse surfacique du voile est comprise entre 50 et 300 $g/m^2$.

Selon une autre particularité, le voile est lié par un liant du type latex butadiène styrène ou par tout autre liant thermoplastique.

Selon une autre particularité, la proportion de liant, en pourcentage massique, est comprise entre 5 et 20%.

L'invention vise également l'utilisation du voile dans des substrats de culture hors-sol constitués de feutres de fibres minérales et qui, par leur structure, permettent de contenir les racines dans un environnement où le taux d'air est maintenu en permanence à des valeurs supérieures au taux minimal nécessaire pour leur meilleur développement, et ce à l'aide d'un dispositif simple et peu onéreux.

Selon l'invention, le substrat de culture hors-sol comprend une partie formée d'un feutre de fibres minérales dans laquelle les racines se développent, une seconde partie au contact de la première qui, par sa densité, le diamètre des fibres, et son épaisseur, maintient en permanence dans la partie colonisée par les racines, un taux d'air supérieur à la valeur minimale fixée au préalable, et, interposé entre les deux parties et s'étendant au moins sur toute la zone de contact, un voile fibreux présentant un "maillage" suffisamment serré pour prévenir le passage des racines vers un milieu où le taux d'air est inférieur à la valeur prédéterminée, ou encore dans le système de drainage.

Les matériaux des deux parties constituant le substrat, ainsi que le voile peuvent être liés les uns aux autres de manière à ne former qu'un seul bloc. Ces matériaux peuvent aussi être simplement juxtaposés.

La partie du substrat dans laquelle la plante plonge ses racines est constituée d'un feutre tel que proposé antérieurement pour la culture. Il s'agit de matériau en fibres naturelles ou de synthèse et avantageusement de laine de roche ou de verre. La masse volumique du feutre est généralement comprise entre 15 et 90 kg/m³, les laines de verre étant généralement de densité moins forte que les laines de roche. Le diamètre moyen des fibres est, ordinairement, inférieur à 20 micromètres et se situe, le plus souvent, entre 1 et 6 micromètres.

Etant destinée à favoriser la croissance des racines, cette première partie du substrat offre un volume en rapport avec les dimensions de la plante cultivée.

La seconde partie du substrat se distingue de la première par le rôle qui doit être le sien, à savoir de maintenir le taux d'humidité dans la première partie au dessous d'un niveau prédéterminé. Ce rôle est assuré de façon dynamique. Le fait que les deux parties du substrat ne sont séparées l'une de l'autre que par le voile hydrophile, assure un équilibre permanent des taux de rétention de solution. Cet équilibre est fonction des caractéristiques propres des matériaux constituant ces deux parties du substrat et aussi de leurs positions respectives. La teneur en solution dans chaque partie est, en effet, fonction de la capacité de rétention (mesurée par le pF) de chaque matériau et de leur épaisseur, capacité qui traduit l'aptitude du matériau à vaincre une certaine pression hydrostatique correspondant au "pompage" de la solution. Par ailleurs, la disposition des deux parties, l'une par rapport à l'autre, ajoute à la différence de pression hydrostatique. En jouant de ces différents facteurs, il est donc possible de régler l'équilibre et, par là, fixer le rapport air/solution de la première partie du substrat.

La seconde partie du substrat est, de préférence, constituée d'un feutre de fibres minérales mais peut également être d'un autre matériau. A remarquer que le choix ne se limite pas aux produits connus pour la culture dans la mesure où cette seconde partie n'est pas destinée à recevoir les racines des plantes.

La seconde partie peut, dans certains cas, exercer le rôle de réservoir d'eau. Il alors est préférable que le matériau constituant la seconde partie présente une capacité de rétention des solutions nutritives au moins égale à celle du matériau constituant la première partie. Avantageusement, la seconde partie présente une capacité de rétention (mesurée par l'indice pF) supérieure à celle du matériau de la première partie.

Pour cette application, lorsque la seconde partie est constituée d'un feutre de fibres minérales, un accroissement de la capacité de rétention des solutions nutritives est avantageusement obtenu, les autres caractéristiques du feutre restant identiques, par une masse volumique plus forte que celle du feutre constituant la première partie du substrat, par des fibres plus fines, par son épaisseur, ou par une combinaison de ces facteurs, de façon à maintenir en permanence dans la partie colonisée par les racines, un taux d'air supérieur à la valeur minimale fixée au préalable.

La séparation des deux parties du substrat est faite avec un voile fibreux. Quelle que soit la nature des fibres ou la structure du voile, il est choisi à la fois pour son caractère hydrophile pour permettre les échanges de solutions entre les deux parties du substrat, et pour son aptitude à faire obstacle au passage des racines. En outre, le voile doit être parfaitement non toxique pour les plantes.

De façon générale, les voiles utilisés ont une épaisseur limitée, ordinairement de l'ordre de 1 à 3 mm et qui ne dépasse pas 5 mm.

Il est clair, dans ces conditions, que le "voile" utilisé selon l'invention pour séparer les deux parties du substrat n'a pratiquement aucun rôle en ce qui concerne le "stockage" de solution. Offrant un volume très limité, même si de la solution est retenue dans la structure du voile, la quantité concernée reste très faible au regard des quantités absorbées dans les deux autres parties constituant le substrat selon l'invention.

Les fibres sont avantageusement des fibres de verre, mais peuvent aussi être synthétiques (polyamide, polyester ...). Elles sont tissées ou non, l'important étant qu'elles forment un réseau ou maillage suffisamment serré pour s'opposer au passage des racines. Pour cela, le réseau laisse des ouvertures qui ne sont pas supérieures à 0,25 mm et, de préférence, pas supérieures à 0,05 mm.

De préférence, selon l'invention, on utilise des voiles fibreux non tissés qui sont, ordinairement, moins coûteux.

Des voiles préférés sont des non-tissés de fibres de verre. Dans ces voiles, les fibres sont liées entre elles par un liant généralement organique. Ces voiles sont habituellement utilisés comme renfort de certains matériaux. Ils sont constitués ordinairement de longues fibres de verre et la nappe est de faible épaisseur.

Par leur constitution, fibres longues notamment, et taux de liant relativement important, les voiles présentent une bonne résistance mécanique en dépit de leur faible épaisseur. Les voiles de fibres de verre ont pour autre avantage d'avoir une structure multi-couches, de préférence croisées, ce qui améliore leur efficacité en tant que barrière au passage des racines.

Les modes de production des voiles utilisés selon l'invention conduisent ordinairement à des structures répondant à cette nécessité. Ces voiles sont obtenus en effet en collectant sur un convoyeur de réception les fibres qui viennent d'être formées. La nappe de faible épaisseur est "enduite" d'un liant liquide. Après séchage, le réseau serré de fibres, joint au liant qui forme des fines membranes entre les fibres, réduisent sensiblement la porosité du voile.

La porosité limitée du voile n'est pas contraire à son hydrophilie. Cette dernière est fonction principalement de la composition de liant. Pour ce dernier, on évite l'utilisation de produits qui se décomposent à l'humidité. En particulier, on évite d'utiliser des liants constitués essentiellement à base d'amidon. Lorsque le liant choisi n'est pas hydrophile, il est possible de lui adjoindre un agent qui lui confère cette qualité. Ainsi, un liant satisfaisant pour les voiles utilisés selon l'invention, est constitué par des latex renfermant des agents tensio-actifs. L'incorporation d'agents tensio-actifs se fait naturellement à partir des émulsions de latex qui sont utilisées comme produits d'imprégnation des fibres. Ils se trouvent en effet présents comme "stabilisateurs" de ces émulsions. Lors de l'application, les agents tensio-actifs se fixent sur les fibres en même temps que le liant lui-même, et les produits résultants restent hydrophiles.

La teneur en agent tensio-actif est suffisamment faible pour que tout risque de phytotoxicité soit écarté. Le taux d'agent mouillant dans le liant "sec" ne dépasse pas, ordinairement, 5% en poids. Rapporté à la masse du voile, ceci correspond à moins de 0,7% d'agent tensio-actif.

De préférence, les agents tensio-actifs utilisés sont du type non-ionique, beaucoup de ceux-ci étant connus pour leur non-toxicité.

Le taux de liant dans le voile est compris, ordinairement, entre 5 et 20% en poids. Des latex utilisés avantageusement sont du type butadiène-styrène.

En dehors des latex, d'autres liants non hydrophobes et non toxiques existent et sont utilisables, notamment des liants à base de résines acryliques, des liants mixtes latex-résines formo-phénoliques, latex-résines urée-phénoliques...

Le maillage du voile, comme indiqué précédemment, est aussi un facteur important pour prévenir le passage des racines tout en laissant subsister une certaine porosité. La quantité de fibres par unité de surface est une mesure de cette densité de fibres. Pour l'application visée, le grammage du voile se situe, de préférence, entre 50 et 300 g/m$^2$.

L'invention est décrite, de façon plus détaillée, dans ce qui suit en faisant référence aux planches de dessins dans lesquelles :

  - la figure 1 est une représentation schématique de la constitution des substrats utilisés dans l'invention ;
  - la figure 2 est une vue, en coupe transversale, d'un mode d'utilisation d'un substrat selon l'invention ;
  - la figure 3 est une vue, en coupe, d'un deuxième mode d'utilisation de l'invention ;
  - la figure 4 est une vue, en coupe, d'un troisième mode d'utilisation de l'invention.

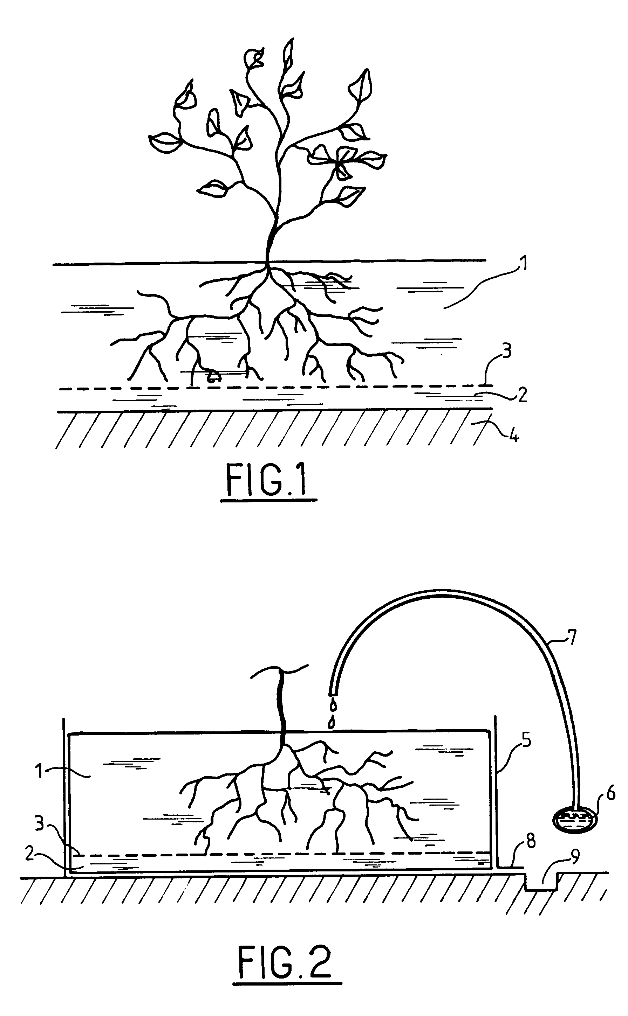

La figure 1 montre la façon dont sont disposés les différents constituants du substrat. La présentation faite montre un assemblage horizontal, mais ceci n'est qu'indicatif, les différents constituants pouvant être dans d'autres positions respectives.

Le matériau fibreux (1), relativement volumineux, dans lequel la plante se développe est à la partie supérieure. Il est séparé du matériau (2) par le voile (3).

Dans cet assemblage, l'alimentation en solution peut être réalisée par la face supérieure sur le matériau (1), par exemple au moyen de goutte à goutte traditionnel. Dans ce cas, sous l'effet combiné de la gravité et de la capillarité, la solution passe du matériau (1) au matériau (2) en franchissant le voile perméable.

Le contact du matériau (2) avec le sol (4), ou support imperméable, entraîne habituellement, même en présence d'un drainage, la formation d'un film permanent.

Dans le mode de réalisation de l'invention, le voile n'est pas au contact direct avec le film liquide. Les racines de la plante qui ne peuvent atteindre le film liquide en raison de la barrière du voile, doivent se développer dans un volume plus conséquent pour "chercher" la solution nutritive et sont maintenues dans des conditions d'équilibre air/eau propices à la meilleure croissance.

La figure 2 montre un mode d'utilisation du substrat selon l'invention. L'ensemble du substrat est disposé dans un "bac" imperméable (5).

L'alimentation en solution nutritive des plantes est réalisée à partir d'une canalisation (6) sous pression par un conduit capillaire (7) laissant couler la solution goutte à goutte sur la partie du substrat (1), dans laquelle les racines se développent. Après avoir imbibé le feutre des parties (1) et (2), la solution se rassemble en partie basse où elle forme une nappe continue. La partie (2) peut dans certains cas être volontairement plus rétentrice d'eau que la première constituant ainsi un réservoir d'eau. Dans la forme présentée, un drain (8) permet l'évacuation de l'excès de solution qui est évacué par une gouttière (9) pratiquée sur le support (4). De plus, ce dispositif empêche l'obstruction du trop-plein ou système de drainage (8) par les racines

Une régulation par capillaire analogue à celle qui vient d'être présentée peut aussi être mise en oeuvre dans un substrat constitué d'éléments horizontaux ou toute autre disposition analogue maintenant le contact qui assure les échanges entre les deux parties du substrat.

Les matériaux des parties (1) et (2) constituant le substrat, ainsi que le voile (3) peuvent être liés les uns aux autres de manière à ne former qu'un seul bloc. Ces matériaux peuvent aussi être simplement juxtaposés.

De préférence, le voile est solidaire d'au moins un des matériaux.

Un mode de fixation du voile à au moins une des deux parties du substrat consiste à utiliser un liant analogue à celui liant les fibres du voile ou pour la constitution du feutre minéral.

Dans les exemples précédents, l'usage des substrats selon l'invention a été présenté avec les substrats disposés dans des bacs. Il va de soi que ceci ne constitue qu'un mode d'utilisation. Un autre mode d'utilisation particulièrement important est celui dans lequel les substrats sont enveloppés d'un film imperméable. Dans ce cas, l'enveloppe peut être utilisée pour maintenir en place les différentes parties du substrat les unes par rapport aux autres, sans plus de moyens de fixation.

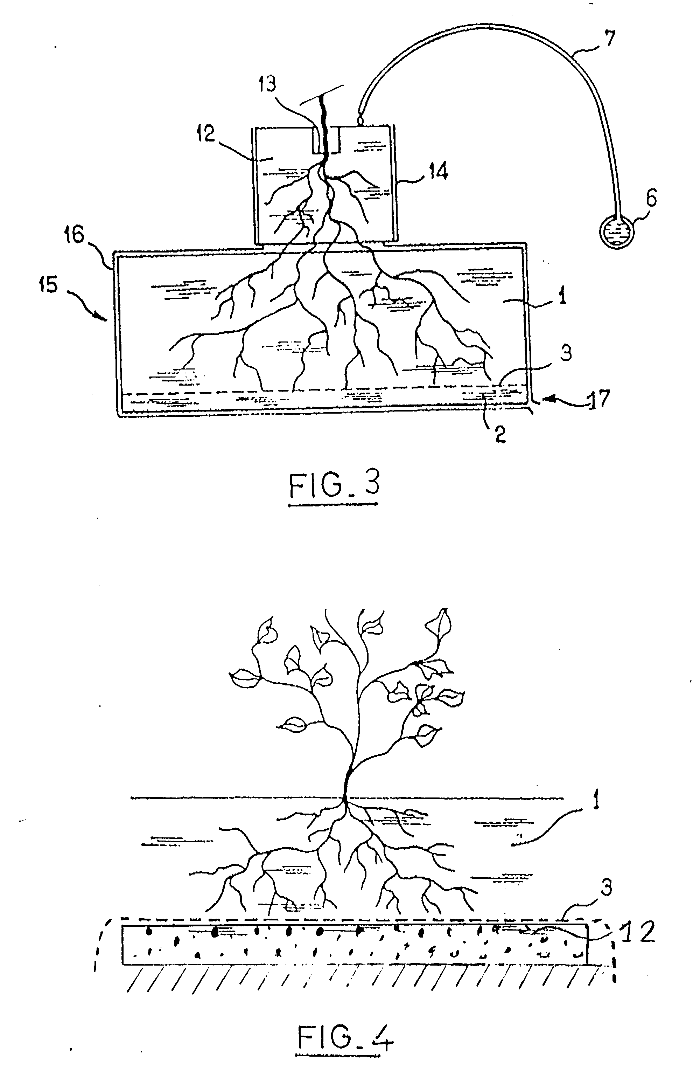

La figure 3 représente un mode d'utilisation d'un substrat revêtu d'une enveloppe imperméable.

Sur cette figure, on a représenté l'ensemble du "pain" de culture associé au "cube" (12) et au "bouchon" (13). Ces différents éléments sont, traditionnellement, utilisés au fur et à mesure de la croissance des plantes pour des raisons d'économie d'espace. Le bouchon (13), de petites dimensions, est utilisé au tout début pour la germination. Il est transféré ensuite sur un cube (12) dont les dimensions sont de l'ordre d'une dizaine de centimètres de côté. Le cube, qui est ordinairement lui-même enveloppé d'un film imperméable (14), est le siège d'un premier développement des racines. Lorsque le volume offert par le cube devient insuffisant, celui-ci est placé sur le pain (15) formé selon l'invention.

Le pain (15) qui constitue le substrat le plus volumineux permet d'achever le développement des plantes. Lorsqu'il est enveloppé d'un film (16) imperméable, des ouvertures sont ménagées à l'emplacement des cubes, dans le pain (15) et dans le fond du cube (12), pour permettre le passage des racines. Le film, après une première mise en eau, est ordinairement entaillé localement à la base pour ménager des drains (17).

Dans le mode de la figure 3, l'alimentation représentée est analogue à celle de la figure 2. Son fonctionnement est aussi du même type. Le goutte à goutte est réalisé sur le cube. La solution imbibe le cube et passe dans le pain. L'excédent de solution, compte tenu des capacités de rétention des différents matériaux, est évacué par l'entaille (17).

Dans l'une ou l'autre des variantes précédentes, il est possible, par exemple, de modifier les caractéristiques des parties de façon que, soit la partie dépourvue de racines soit constituée de fibres minérales dont le diamètre moyen est inférieur à celui des fibres constituant l'espace colonisé par les racines, les deux parties ayant une densité du même ordre, soit la densité de la partie dépourvue de racines soit supérieure à celle de la partie colonisée par les racines, les deux parties étant constituées de fibres minérales de même diamètre moyen.

La figure 4 représente une nouvelle application du voile selon l'invention pour améliorer le drainage du substrat (1) par un effet de succion exercé par le voile (3). La zone inférieure (12) ou deuxième partie, est constituée de façon avantageuse de polystyrène et, pour éviter le développement des racines, son épaisseur est plus importante de façon à élever le substrat (1) et créer une dépression au sein de ce premier substrat (1). Le voile (3) intercalé entre le substrat à fibres minérales (1) et le substrat en polystyrène crée un effet de succion de l'eau.

Dans les trois variantes, ou l'une des trois variantes, la croissance des plantes pourra, par exemple, être limitée à un espace où le pourcentage d'eau présent est inférieur à 90% du volume poreux.

De même, le voile pourra soit entourer le substrat sur trois des faces contiguës du substrat de forme parallélépipédique, soit entourer le substrat sur cinq des faces contiguës du substrat de forme parllélépipédique.

## Revendications

1. Voile en fibres hydrophiles caractérisé en ce qu'il s'oppose au passage des racines et en ce que son maillage comporte des ouvertures d'un diamètre inférieur à 250 microns.

2. Voile en fibres hydrophiles selon la revendication 1, caractérisé en ce qu'il est constitué de fibres de verre.

3. Voile en fibres hydrophiles selon la revendication 1, caractérisé en ce que sa masse surfacique est comprise entre 50 et 300 g/m².

4. Voile en fibres hydrophiles selon la revendication 1, caractérisé en ce qu'il est lié par un liant du type latex butadiène styrène ou par tout autre liant thermoplastique.

5 Voile en fibres hydrophiles selon la revendication 4, caractérisé en ce que la proportion de liant, en pourcentage massique, est comprise entre 5 et 20%.

6. Substrat de culture hors-sol disposé dans une enveloppe ou bac étanche comportant un système de drainage, caractérisé en ce qu'un voile en fibres hydrophiles conforme aux revendications 1 à 5 s'oppose à l'obstruction du système de drainage.

7. Substrat de culture hors-sol comportant un voile hydrophile conforme aux revendications 1 à 5, limitant la croissance des racines à un milieu non saturé en eau.

8. Substrat de culture hors-sol selon la revendication 7, dans lequel la croissance des racines est limitée à un espace où le pourcentage d'eau présent est inférieur à 90% du volume poreux.

**9.** Substrat de culture hors-sol caractérisé en ce que la croissance des racines est limitée géographiquement par la présence d'un voile en fibres hydrophiles selon une des revendications 1 à 5 et entourant au moins une partie de la périphérie du substrat en fibres minérales.

**10.** Substrat de culture hors-sol selon la revendication 9, caractérisé en ce que le voile entoure le substrat sur trois des faces contiguës du substrat de forme parallèlépipédique.

**11.** Substrat de culture hors-sol selon la revendication 9, caractérisé en ce que le voile entoure le substrat sur cinq des faces contiguës du substrat de forme parllélépipédique.

**12.** Substrat de culture hors-sol selon l'une des revendications 7 à 11, caractérisé en ce que la partie dépourvue de racines est constituée de fibres minérales dont le diamètre moyen est inférieur à celui des fibres constituant l'espace colonisé par les racines, les deux parties ayant une densité du même ordre.

**13.** Substrat de culture hors-sol selon l'une des revendications 7 à 11, caractérisé en ce que la densité de la partie dépourvue de racines est supérieure à celle de la partie colonisée par les racines, les deux parties étant constituées de fibres minérales de même diamètre moyen.

**14.** Substrat de culture hors-sol caractérisé en ce qu'il comprend : une première partie formée d'un feutre de fibres minérales dans laquelle les racines se développent ; une seconde partie de fibres minérales ou de polystyrène au contact de la première qui, par sa densité, le diamètre des fibres et son épaisseur, maintient en permanence un taux d'air supérieur à la valeur minimale fixée au préalable et interposé entre les deux parties et s'étendant au moins sur toute la zone de contact ; un voile fibreux selon une des revendications 1 à 5 présentant un maillage suffisamment serré pour prévenir le passage des racines vers un milieu où le taux d'air est inférieur à la valeur prédéterminée, ou encore dans un système de drainage.

**15.** Substrat selon la revendication 14, caractérisé en ce que le premier substrat (1) est un feutre de fibres minérales, le deuxième substrat (2) est en polystyrène et a une épaisseur suffisante pour créer une dépression au sein du premier substrat (1) et le voile (3) intercalé entre les deux autres substrats (1) et (2) crée un effet de succion de l'eau.

FIG.1

FIG.2

FIG_3

FIG_4

Office européen
des brevets

**RAPPORT DE RECHERCHE EUROPEENNE**

Numero de la demande

EP    92 40 1792

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 403 346 (ISOVER SAINT GOBAIN) * colonne 2, ligne 42 - colonne 3, ligne 1 * * colonne 6, ligne 26 - ligne 53; revendications 1,5-7 * | 1-5,7 | A01G31/00 |
| A | | 14 | |
| Y | EP-A-0 268 556 (ORBISPHERE CORPORATION) * colonne 6, ligne 18 - ligne 27 * | 1-5,7 | |
| A | | 2-9 | |
| A | EP-A-0 338 479 (GESSNER & CO. GMBH) * revendications 1-3,5-7,9 * | 2-4 | |
| A | CH-A-675 941 (ROOST) * colonne 1, ligne 35 - colonne 2, ligne 2; figure * | 7 | |
| A | EP-A-0 201 426 (ISOVER SAINT-GOBAIN) * colonne 11, ligne 52 - colonne 12, ligne 4; figure 2 * | 7,9,14 | |

DOMAINES TECHNIQUES RECHERCHES (Int. Cl.5)

A01G

Le présent rapport a été établi pour toutes les revendications

| Lieu de la recherche | Date d'achèvement de la recherche | Examinateur |
|---|---|---|
| LA HAYE | 21 OCTOBRE 1992 | FONTS CAVESTANY A. |